(19)

**Europäisches Patentamt**
**European Patent Office**
**Office européen des brevets**

(11)     **EP 2 908 095 B1**

(12)               **EUROPEAN PATENT SPECIFICATION**

(45) Date of publication and mention
of the grant of the patent:
**19.07.2017  Bulletin 2017/29**

(51) Int Cl.:
***G01C 17/34*** [(2006.01)]          ***B64G 1/36*** [(2006.01)]

(21) Application number: **14000559.6**

(22) Date of filing: **17.02.2014**

(54) **Sun sensor for determining a position of the sun relative to an object**

Sonnensensor zur Bestimmung der Position der Sonne hinsichtlich eines Objektes

Capteur solaire pour déterminer la position du soleil par rapport à un objet

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.08.2015  Bulletin 2015/34**

(73) Proprietor: **Airbus DS GmbH
82024 Taufkirchen (DE)**

(72) Inventors:
• **Ziegler, Tobias
78462 Konstanz (DE)**
• **Hechenblaikner, Gerald
88677 Markdorf (DE)**

(74) Representative: **Schicker, Silvia
Wuesthoff & Wuesthoff
Patentanwälte PartG mbB
Schweigerstraße 2
81541 München (DE)**

(56) References cited:
**US-A- 3 188 472**

• **HECHENBLAIKNER GERALD ET AL: "Energy distribution and quantum yield for photoemission from air-contaminated gold surfaces under ultraviolet illumination close to the threshold", JOURNAL OF APPLIED PHYSICS, vol. 111, no. 12, 124914, 15 June 2012 (2012-06-15), pages 1-12, XP012157929, AMERICAN INSTITUTE OF PHYSICS, US ISSN: 0021-8979, DOI: 10.1063/1.4730638 [retrieved on 2012-06-29]**
• **HERBERT IVES: "The Vectorial Photoelectric Effect in Thin Films of Alkali Metals", PHYSICAL REVIEW, vol. 38, no. 6, 1 September 1931 (1931-09-01), pages 1209-1218, XP055128677, ISSN: 0031-899X, DOI: 10.1103/PhysRev.38.1209**
• **PEDERSOLI E ET AL: "Evidence of vectorial photoelectric effect on Copper", APPLIED PHYSICS LETTERS, vol. 87, no. 8, 081112, 17 August 2005 (2005-08-17), pages 081112-1-081112-3, XP012077524, AMERICAN INSTITUTE OF PHYSICS, US ISSN: 0003-6951, DOI: 10.1063/1.2031949**
• **GERALD HECHENBLAIKNER ET AL: "The vectorial photoelectric effect under solar irradiance and its application to sun sensing", MEASUREMENT SCIENCE AND TECHNOLOGY, vol. 25, no. 7, 075103, 14 May 2014 (2014-05-14), page 9PP, XP055128151, ISSN: 0957-0233, DOI: 10.1088/0957-0233/25/7/075103**

EP 2 908 095 B1

**Description**

The invention relates to a sun sensor for determining a position of the sun relative to an object, in particular for use in an attitude and orbit control system of a spacecraft, with at least one detector.

Sun sensors are an essential element of an attitude and orbit control system (AOCS) of almost every satellite. The majority of used analogue sun sensors are based on photo-diodes which measure the solar flux projected onto a detector surface and generate a corresponding photo-current I [9]. The current I is proportional to incidence angle $\theta$ between the surface normal vector and the direction of the solar rays, as given by Equation (1)

$$I = I_0 \cos\theta \qquad (1)$$

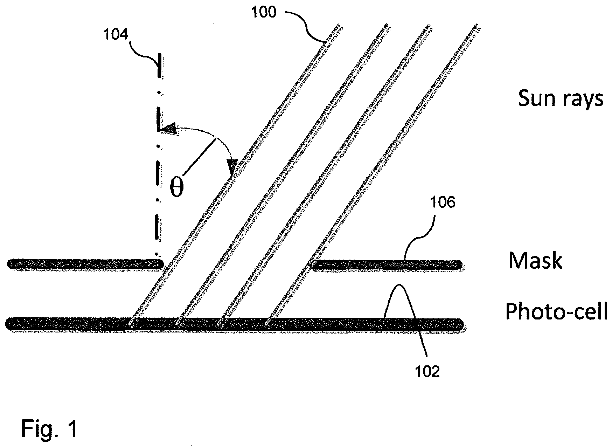

Figure 1 schematically illustrates a diagram of a conventional photo-detector of an analogue sun sensor: Sun rays 100 are incident on a detector surface 102 (photocell) at an angle $\theta$, leading to a modulation of a photo-current according to equation (1). The incident angle $\theta$ is constituted between the surface normal vector 104 and the direction of the solar rays 100. In front of the detector surface 102 a mask 106 is arranged. The mask 106 allows a part of the solar rays to pass through the mask to incident on the detector surface 102.

Various implementations and model configurations of sun sensors combine or subtract the photo-current from several photo-cells in specific geometric arrangements, which optimizes and custom tailors the sun sensor to the specific application requirements [9]. However, in most cases the various configurations rely on the same basic principle of a "cosine detector", as outlined above in Equation (1).

US 3,188,472 A1, for example, discloses an apparatus for determining satellite orientation with a "cosine detector". In the article "Energy distribution and quantum yield for photoemission from air-contaminated gold surfaces under ultraviolet illumination close to the threshold" of Hechenblaikner et al. (Journal of Applied Physics, American Institute of Physics, vol. 111, no. 12, 15 June 2012) the vectorial photo-effect is discussed in relation with the kinetic energy distributions of photo-electrons emitted from gold surfaces under illumination by UV-light.

The sensitivity coefficient $K_s$ describes how sensitive the detector output current is towards small changes of the incidence angle $\theta$. From a detailed analysis it can be shown that a high sensitivity to angular changes implies a large robustness to fluctuations in the intensity of the incident light and to overall gain variations. The coefficient $K_s$ can either be defined in terms of angular sensitivity relative to the angle of normal incidence or in terms of angular sensitivity relative to the actual angle of incidence.

Adopting the former definition, the coefficient $K_s$ is written as the derivative of the current with respect to $\Theta$, normalized by the current at normal incidence: .

$$K_s = \left| \frac{d}{d\theta} \frac{I(\theta)}{I(0)} \right| \qquad (2)$$

As can be seen from Equation (2), the sensitivity $K_s$ is always $\leq 1$ for a cosine detector. Hence, the cosine detector relies on a mere geometric projection resulting in low measurement precision.

It is the object of the present invention to provide a sun sensor for determining a position of the sun relative to an object, in particular for use in an attitude and orbit control system of a spacecraft, being insensitive to albedo and having an improved accuracy, which leads to less sensitivity to fluctuations of solar irradiance and sensor gain variations.

These objects are solved by a sun sensor according to the features of claim 1. Preferred embodiments are set out in the dependent claims.

According to an aspect of the invention, a sun sensor, in particular for use in an attitude and orbit control system of a spacecraft, where at least one detector is provided. Each of the detectors comprises a cathode with at least one planar detector surface that is made of metal and emits electrons upon exposure to UV-light; a receiving anode for collecting the electrons emitted by the at least one planar detector surface; a current sensing means for measuring a current that is generated by the electrons which are emitted by the at least one planar detector surface; and a processing unit for evaluating the current measured by the current sensing means, wherein the processing unit is adapted to determine an incidence angle of solar rays from an amount of the evaluated current. The at least one planar detector surface is inclined with respect to an aperture plane of the sun sensor that allows the solar rays to incide on the planar detector surface.

The sun sensor according to the invention makes use of the well-known "vectorial photoelectric effect" [2], [3]. This effect is essentially based on greater emission efficiency for light with a polarization component normal to the surface than for light with a polarization component parallel to the surface. Only p-polarized light, for which the polarization vector lies in the plane of incidence, has such a normal component. The polarization component normal to the surface of p-polarized light increases with increasing incidence angle $\Theta$, which in turn leads to a large rise in emission efficiency. The sensitivity of photo-emission to variations in the incidence angle constitutes the basis for what can be referred to as a "Vectorial photoelectric effect (VPE) detector".

According to a preferred embodiment, the metal of the detector surface is selected from a material having a vectorial photo-electric effect. In particular, the metal of the detector surface may be selected from a noble metal, in particular gold.

In one alternative the substrate may be made from the metal to represent the detector surface. In another alternative, the substrate may comprise a bulk material which is coated with the metal. For example, the substrate may form an integral building block for various types of sun sensors. The substrate can be easily scaled for any application requirement. The substrate makes the detector very robust regarding to degradation and ageing effects.

According to a preferred embodiment, at least one detector surface may be encapsulated in a housing. For example, the detector of the sun sensor may be encapsulated in a sealed housing or a bulb on ground. Furthermore, ground packaged and/or sealed detectors may consist of COTS (Au) photocathodes or customized detector surfaces that can be sealed on ground to be protected against possible contamination sources on ground or in space.

Alternatively, at least one detector surface may be arranged in a free-to-space-configuration. That means that the detector surface is directly exposed to its environment. Although such an arrangement is sensitive to potential surface contaminations, these are mitigated by the cleaning effect due to a strong UV illumination [10],[11],[12], as well as due the residual concentrations of atomic oxygen at high altitudes.

According to a further preferred embodiment, a polarization filter may be arranged in front of the at least one detector surface. The usage of a polarization filter increases the detection sensitivity of the sun sensor (and therefore spacecraft) attitude with respect to the sun. If only p-polarized light is incident on the detector surface, the sensor sensitivity can be increased (on cost of lower detection currents).

According to a further preferred embodiment, an optical window filter may be arranged in front of the at least one detector surface. The usage of an optical window filter increases the detection sensitivity of the sensor, i.e. the detector (and therefore object, e.g. a spacecraft) attitude with respect to the sun.

The at least one detector surface may be inclined with respect to a detector window. Applying an inclination of the detector surface(s) with respect to a detector window and an optional transmission mask increases the detection sensitivity of the sensor (and therefore object, e.g. a spacecraft attitude with respect to the sun).

According to a further preferred embodiment, a voltage source for providing a negative bias voltage to the at least one detector surface may be provided. Applying a negative bias voltage on the detector surface and, at the same time, the collector at object (spacecraft) reference ground potential prevents the detector to collect electrons from other sources.

According to a further embodiment, the receiving anode may be arranged above the at least one detector surface while having a predetermined distance to the at least one detector surface. The usage of an electron collector above the sensor surface, i.e. the metal substrate, allows establishing a well-defined electrical circuit which is robust against absolute potentials and potential variations of the object, e.g. the spacecraft.

The receiving anode may be made from a wire mesh.

Summarizing, the invention proposes to use "vectorial photoelectric effect" detectors (VPE detectors) instead of conventional cosine detectors in analogue sun sensors. Therefore, the individual VPE detector can form an integral building block for various types of sun sensors which - similar to existing cosine detector arrangements - can form combinations between several VPE detectors.

Advantages of VPE detectors over conventional cosine detectors, if used in sun sensors, are:

Sensitivity: A VPE detector has a larger sensitivity of photo-current on changes of incidence angle. An improvement by factor ~10-20 is expected.

Albedo correction: Conventional sun sensors are based on cosine detectors that operate in the visible spectrum and therefore require an earth albedo correction for precise angular measurements. In contrast, the VPE detector relies on UV-light with wavelengths below 300 nm and is therefore insensitive to the earth albedo.

Lifetime: The detector lifetime is expected to be longer, as the metal (e.g. gold) coated surfaces of a VPE detector are less sensitive to radiation from highly energetic particles (protons, electrons) than conventional silicon-based detectors. This opens opportunities for preferred use in space missions closer to the sun where radiation levels can be considerably higher and material aging is considerably worse than close to earth.

Degradation: Only insignificant aging and few degradation effects are expected if the VPEs are based on gold-coated substrates. Gold is chemically quite inert and the surfaces therefore do not easily oxidize, which could otherwise considerably impair the vectorial photoelectric emission efficiency [2]. Additionally, gold surfaces that are strongly illuminated by UV-light display a cleaning effect. This can mitigate potential sensor surface contaminations.

Detector gain variations: Little change of detector gain and the corresponding calibration curve over time are expected, due to the small degradation. In contrast, the gain of silicon-based detectors may degrade by 10% or more over their lifetime.

Ease of manufacture: VPE detectors are easy to manufacture, in particular easy to scale in size and geometry. Detector areas on the order of tens of square centimeters can be manufactures as easily as smaller ones (1 cm$^2$ baseline).

The invention will be described in more detail by reference to the accompanying figures.

| | |
|---|---|
| Figure 1 | shows a schematically diagram of a conventional photo-detector as a core element of an analogue sun sensor. |
| Figure 2 | shows a comparison of normalized sensitivities (i.e. photo-currents) of a cosine detector and a generic VPE detector. |
| Figs. 3a, 3b | show the solar spectral intensity plotted against the radiation energy at a distance of 150 million km from the sun, wherein Fig. 3a shows a full spectrum and Fig 3b shows a spectral zoom into a selected region. |
| Figure 4 | shows the normalized quantum efficiency plotted for light of energy hv = 5.44 eV and various polarizations. |
| Figure 5 | shows the quantum efficiency (QE) of p-polarized light for the total emission and the bulk emission. |
| Figure 6: | shows cooperativity parameters for three measurements of Perdersoli [4] plotted against the difference $\Delta E$ between the radiation energy and the work function of copper $\phi$=4.94 eV, i.e. against $\Delta E$=hv-$\Phi$. |
| Figure 7 | shows the measured quantum efficiencies normalized by the amount of absorbed light (1-R) for three different energies. |
| Figure 8 | shows the index of refraction plotted for copper and gold over a wave-length range corresponding to photon energies from 5.1 eV to 11 eV. |
| Figs. 9a to 9d | show photon flux, quantum efficiency, emitted electron flux, and cumulative emission current which are plotted against photon energy for 0° incidence angle of the light. |
| Figure 10 | shows emission currents as a function of incidence angle for the case that all photon energies above the threshold are considered and for the case that only photons up to 0.5 eV above threshold are considered. |
| Figure 11 | shows a different representation of the data in Figure 10, in which the emission current normalized by its value at normal incidence is illustrated. |
| Figure 12 | shows (normalized) photo-emission currents for light cut-off at 0.5 eV above a given threshold. |
| Figure 13 | shows quantum efficiency, geometric projection factor, and the product thereof for a tilted VPE detector. |
| Figure 14a | shows a photo of Hamamatsu phototubes. |
| Figure 14b | shows dimensions of the Hamamatsu phototube containing a gold cathode. |
| Figure 15 | shows an example of a single VPE detector used as a sun sensor. |
| Figure 16 | shows an embodiment of a sun sensor according to the invention having two detectors where both are inclined with respect to the sun at normal incidence. |
| Figure 17 | shows the transmission through an uncoated fused silica substrate of 10 mm thickness. |
| Figure 18 | shows an ideal UV window for the VPE detector that transmits light between 243 nm and 221 nm before |

dropping to zero transmission at higher wavelengths.

Figure 19        shows a Raman emitter filter with a cutoff at 229 nm.

Figure 20        shows a polarizer ensuring that the detector is sensitive to light in the plane of incidence spanned by polarizer axis and surface normal.

Figure 21        shows typical transmission and contrast ratio versus wavelength over the usable wavelength range for nanowire polarizers.

Figure 22        shows a schematic of an operating circuit used for a VPE detector according to the invention.

The novel sun sensor according to the invention relies on an effect which is called "vectorial photoelectric effect" [2], [3] and which is entirely different than the mere geometric projection of a cosine detector. This vectorial photoelectric effect is essentially based on greater emission efficiency for light with a polarization component normal to the surface than for light with a polarization component parallel to the surface. Only p-polarized light, for which the polarization vector lies in the plane of incidence, has such a normal component. The polarization component normal to the surface of p-polarized light increases with increasing incidence angle θ, which in turn leads to a large rise in emission efficiency. The sensitivity of photo-emission to variations in the incidence angle constitutes the basis for what is referred to as a "Vectorial photo-electric effect (VPE) detector". A sun sensor according to the invention may have one or more of such VPE detectors which will be described more detailed below.

The basic principle of a VPE detector is as follows:

Assuming that UV-light is incident on a metal-coated, in particular a gold-coated, substrate surface, the quantum efficiency for the emission of photo-electrons is given by Equation (3) for angles between -60° to +60°:

$$I \approx I_0 \left( 1 + B \sin^2 \theta \right) \qquad (3)$$

As will become apparent by the description of how the photo-currents for the VPE detector are calculated, a value of B ~ 16 is obtained for the sensitivity parameter B of Equation (3) under certain assumptions. This leads to strongly increasing photo-currents with increasing incidence angle in VPE detectors. They are therefore much more sensitive to changes of the light incidence angle than standard cosine detectors. Depending on the detector geometry, the slope of the sensitivity curve may be up to 20 times larger than for a cosine detector.

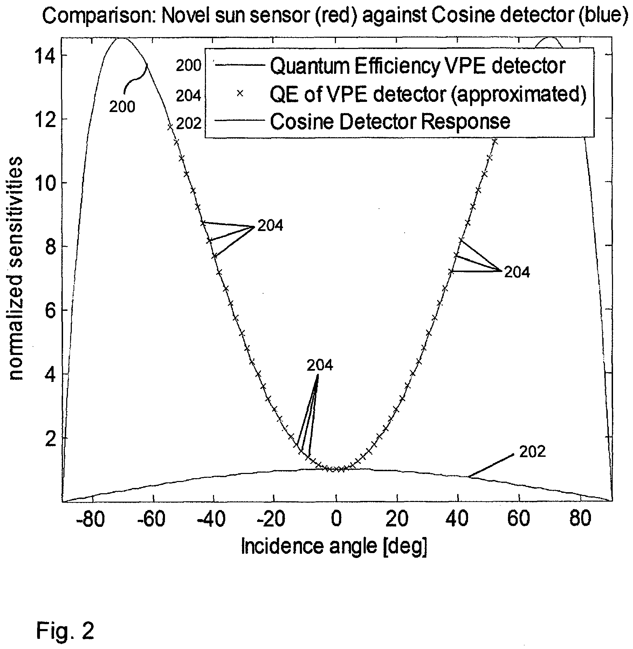

In Figure 2, the variation of quantum efficiency for a generic VPE detector (200) is plotted together with the sensitivity curve 202 for the cosine detector for the sake of comparison. An analytical approximation according to Equation (3) is given by the crosses 204 for angles <60°. The sensitivities are normalized and represent photo-currents. Whereas the solid line 200 was found from detailed numerical calculations, the crosses 204 indicate an analytical approximation according to Equation (3).

In the following section a detailed description of how the photo-currents for the VPE detectors are calculated will be described together with a derivation of underlying formulae and required background information. Furthermore, pertinent assumptions leading to calculation of the photo-current curve for the VPE detector are discussed.

Afterwards, embodiments of a sun detector comprising at least one VPE detector will be described.

Determination of photo-currents for the VPE detector

The solar spectrum

An expression for the energy radiated by an ideal black-body per unit area and per unit time within a frequency interval (v, v + dv) is given as:

$$I(v, T)dv = \frac{hv^3}{c^2} \frac{2\pi}{e^{\frac{hv}{k_B T}} - 1} dv \qquad (4)$$

where v is the frequency, $k_B$ is Boltzmann's constant, T the temperature of the black-body, and h is Planck's constant.

Integrating over the frequency, Stefan's law is obtained:

$$I(T) = \int_0^\infty I(\nu, T)\, d\nu = \sigma T^4$$

$$\sigma = \frac{\pi^2 k_B^4}{60 \hbar^3 c^2} = 5.6703 \times 10^{-8}\ W \cdot m^{-2} \cdot K^{-4}$$

$$(5)$$

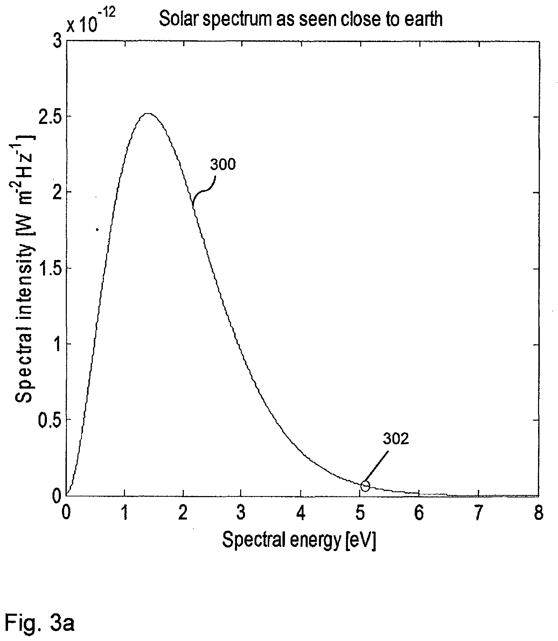

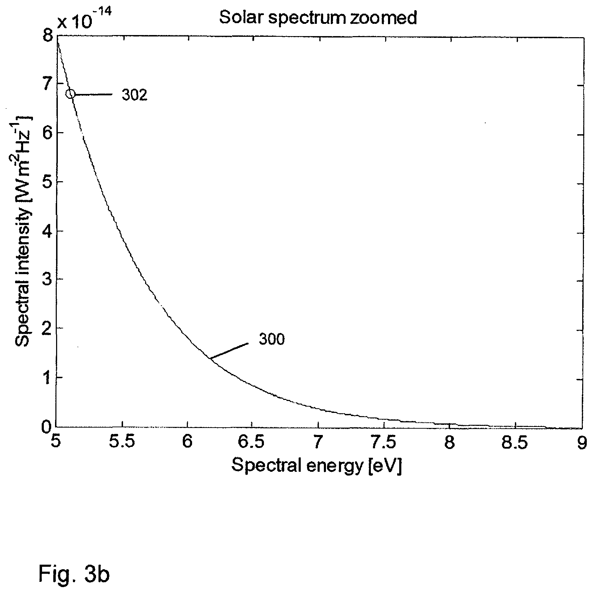

Based on Equation (4), in Figure 3a the full energy spectrum 300 of the sun is plotted against the radiation energy in units of [eV] at a distance of 150 million km from the sun. The cutoff at 5.1 eV, corresponding to the work function of gold, is given by the circle 302. In Figure 3b, a spectral zoom into the region above cut-off is shown. A temperature of 5780 K was assumed for the sun. The fact that the spectrum is assumed to be recorded at 1 au (~150 million km) from the sun requires multiplying the integrand of Equation (4) by a factor F equal to the squared ratio between sun radius $R_{sun}$ and the distance to earth: $F = (R_{sun}/au)^2$.

It is preferred to use a substrate coated with gold for the VPE detector, only solar radiation above the work function of gold, ($\Phi_{Au}$=5.1 eV (circle 302 in Figs. 3a and 3b), affects the emission of photo-electrons. The contributions of the spectrum above this cut-off are given by the high energy tail of Figs. 3.

Integrating the full spectrum from 0 to infinity, a total solar flux of 1384 W/m$^2$ incident on a satellite close to earth can be found. The solar flux contribution above the cut-off energy is found to be 0.80 % of the total solar flux energy from integrating the solar flux from a frequency corresponding to an energy of 5.1 eV to infinity. This corresponds to a total power 1.11 mW of UV light above 5.1 eV incident on a 1 cm x 1 cm surface area.

The photoelectric effect for bulk emission

For establishing the photoelectric effect for bulk emission, the following definitions are given: The *Quantum Yield (QY)* is the number of photo-electrons emitted per absorbed photon. The *Quantum Efficiency (QE)* is the number of photo-electrons emitted per incident photon.

The photoelectric emission is generally considered as coming from the material bulk. Whereas the detailed atomic lattice structure and the corresponding energy bands are important and determine detailed features of the photoemission process, it is possible to obtain an approximation of the quantum efficiency by Fowler's law [1], [4]. It describes the dependence of the Quantum Efficiency (QE) on the frequency ν of the incident light and is generally a reasonably good approximation. Fowler's law may be written as:

$$QE(\theta) = A_{PE}\left(1 - R(\theta)\right)\left(h\nu - \phi_{Au}\right)^2 \qquad (6)$$

where $A_{PE}$ is a proportionality constant that depends on the material properties. Note that only absorbed photons contribute to photo-emission. Therefore, the expression for QE contains a factor (1-R) that accounts for the absorption probability, where R denotes the reflection coefficient at incidence angle $\Theta$.

The vectorial photoelectric effect

In conventional descriptions of the emission of photo-electrons from bulk material, such as given by Fowler's law [1] and derivatives thereof, there is usually no distinction made between the emission efficiency of light polarized parallel or normal to the surface. However, Broudy [2] showed that the emission of electrons due to light polarized perpendicular to the surface is much more efficient than emission of electrons due to light polarized parallel to the surface. Recent experimental evidence has also been found in the work of Pedersoli et al. [3], [4], which investigated the angular dependence of photo-emission from copper surfaces.

General Mixed Polarization: To derive an expression for the total efficiency of photo-emission under consideration of polarization aspects, one can start with an appropriate generic ansatz for the total quantum efficiency: It is written as the sum of the absorbed energies of light polarized parallel to the surface ($\varepsilon_\square$) and of light polarized normal to the surface ($\varepsilon_\perp$), which together yield the total absorbed energy $\varepsilon_{tot}$. As the variation of the quantum efficiency with the light incidence angle is of interest, the total emission for a given angle θ is normalized by the emission at normal incidence (θ=0). Furthermore, as it is assumed that the emission of electrons from light polarized perpendicular to the surface is more efficient, an efficiency scaling factor r for the absorbed light of polarization normal to the surface is introduced [2]. It is to be noted that this scaling factor is only necessary in the nominator, as the total energy at normal incidence (θ=0) does not contain any component of normal polarization:

$$\frac{QE(\theta)}{QE(0)} = \frac{\varepsilon_{\square}(\theta)}{\varepsilon_{tot}(0)} + r \cdot \frac{\varepsilon_{\perp}(\theta)}{\varepsilon_{tot}(0)} \qquad (7)$$

The following equations relate the energies of light absorbed for different polarizations:

$$\varepsilon_{\square} = \varepsilon_s + \varepsilon_{p\square} \qquad \varepsilon_{\perp} = \varepsilon_{p\perp}$$
$$\varepsilon_{tot} = \varepsilon_{\square} + \varepsilon_{\perp} = \varepsilon_s + \varepsilon_{p\square} + \varepsilon_{p\perp} \qquad (8)$$

where $\varepsilon_{p\perp}$ and $\varepsilon_{p\square}$, are the absorbed energy of p-polarized incident light normal and parallel to the surface, respectively, and $\varepsilon_s$ is the absorbed energy of s-polarized incident light. Considering the relations given in Equation (8), Equation (7) can be written as follows:

$$\frac{QE(\theta)}{QE(0)} = \frac{\varepsilon_s(\theta) + \varepsilon_{p\square}(\theta)}{\varepsilon_s(0) + \varepsilon_{p\square}(0)} + r \cdot \frac{\varepsilon_{p\perp}(\theta)}{\varepsilon_s(0) + \varepsilon_{p\perp}(0)} \qquad (9)$$

where it is considered that $\varepsilon_{p\perp}(0) = 0$. In other words, it is only the component of p-polarized light that is normal to the surface that experiences an increased efficiency which is described by the factor r. If r is set to 1 (r=1), the perpendicular component is not preferred over the parallel components and all polarizations contribute equally to the emission process. This is the case for ordinary bulk emission as described by Fowler's law. In this case it is found from Equation (9):

$$\frac{QE(\theta)}{QE(0)} = \frac{\varepsilon_s(\theta) + \varepsilon_{p\square}(\theta) + \varepsilon_{p\perp}(\theta)}{\varepsilon_s(0) + \varepsilon_{p\square}(0) + \varepsilon_{p\perp}(0)} = \frac{\varepsilon_{tot}(\theta)}{\varepsilon_{tot}(0)} = \frac{1 - R(\theta)}{1 - R(0)} \qquad (10)$$

which is also found directly from Fowler's law Equation (6).

S-polarized and P-polarized light: If it is assumed that there is polarized light of either s-polarization or p-polarization, Equation (9) can be rewritten as follows:

$$\frac{QE_s(\theta)}{QE_s(0)} = \frac{\varepsilon_s(\theta)}{\varepsilon_s(0)} \qquad (11)$$

$$\frac{QE_p(\theta)}{QE_p(0)} = \frac{\varepsilon_{p\square}(\theta)}{\varepsilon_{p\square}(0)} + r \cdot \frac{\varepsilon_{p\perp}(\theta)}{\varepsilon_{p\square}(0)} \qquad (12)$$

Determining the absorbed energies: Detailed calculations for the amplitudes of electromagnetic radiation just inside the surface optical-transition distance have been performed by Fan [5] and were used by Broudy [2]. The results for the components of the electrical field ($E_s$, $E_{p\|}$, $E_{p\perp}$), which were normalized by the amplitude of the incident field $E_i$, are listed in the equations below:

$$E_s / E_i = 2\cos\theta / (s + \cos\theta)$$
$$E_{p\square} / E_i = 2s\cos\theta / (s + s_0^2 \cos\theta) \qquad (13)$$
$$E_{p\perp} / E_i = 2\sin\theta\cos\theta / (s + s_0^2 \cos\theta)$$

In Equation (13), the following parameters are used which contain the refractive index n and absorption coefficient k of the material:

$$s = \sqrt{s_0^2 - \sin^2 \theta}, \qquad s_0 = n + ik$$

$$(14)$$

To find out the respective energies which are absorbed by the various polarizations, Broudy suggests two possible approaches:

    1. Total energy ratios
    2. Ratios of electrical fields just inside the medium

Both types of ratios are calculated as angular quantities normalized to 0° incidence angle. It was shown by Broudy that both approaches lead to almost identical results, with differences on the order of a few percent at most. For the following discussions the results for the total energy ratios shall be adopted.

Calculating the total energy ratios: Total energy ratios primarily depend on the material reflectivities. Expressions for the reflectivities for the two types of polarization are given in the Equations below:

$$R_p(\theta) = \left| s_0^2 \cos\theta - s \right|^2 / \left| s_0^2 \cos\theta + s \right|^2$$
$$R_s(\theta) = \left| s - \cos\theta \right|^2 / \left| s + \cos\theta \right|^2 \qquad (15)$$
$$R(\theta) = \frac{1}{2}\left( R_p(\theta) + R_s(\theta) \right)$$

The total energy of absorbed s-polarized $\varepsilon_s$ light is therefore found from

$$\frac{\varepsilon_s(\theta)}{\varepsilon_s(0)} = \frac{1 - R_s(\theta)}{1 - R_s(0)} \qquad (16)$$

The total energy of p-polarized light is similarly found from

$$\frac{\varepsilon_p(\theta)}{\varepsilon_p(0)} = \frac{1 - R_p(\theta)}{1 - R_p(0)} \qquad (17)$$

However, p-polarized light has a component parallel to the surface and a component normal to the surface. The distinction between these components is crucial, as a much higher efficiency to the normal component than to the parallel one (see Equation (12) is attributed. It is therefore assumed that the amount of absorbed p-polarized light with orthogonal polarization is proportional to the energy ratio of p-polarized light with orthogonal polarization to the total amount of p-polarized light, as expressed in Equation 18. The same reasoning applies to p-polarized light with parallel polarization, as expressed in Equation 19. :

$$\frac{\varepsilon_{p\perp}(\theta)}{\varepsilon_{p\perp}(0)} = \frac{1 - R_p(\theta)}{1 - R_p(0)} \frac{\left| E_{p\perp}(\theta) \right|^2}{\left| E_{p\parallel}(\theta) \right|^2 + \left| E_{p\perp}(\theta) \right|^2} \qquad (18)$$

$$\frac{\varepsilon_{p\parallel}(\theta)}{\varepsilon_{p\parallel}(0)} = \frac{1 - R_p(\theta)}{1 - R_p(0)} \frac{\left| E_{p\parallel}(\theta) \right|^2}{\left| E_{p\parallel}(\theta) \right|^2 + \left| E_{p\perp}(\theta) \right|^2} \qquad (19)$$

The Quantum Efficiency for the vectorial photoelectric effect: Putting the results of Equations (11), (12), (16), (18), (19) together, the following expression for the vectorial photo-efficiency is obtained:

$$\frac{QE_s(\theta)}{QE_s(0)} = \frac{1 - R_s(\theta)}{1 - R_s(0)} \qquad (20)$$

$$\frac{QE_p(\theta)}{QE_p(0)} = \frac{1 - R_p(\theta)}{1 - R_p(0)} \left[ \frac{|E_{p\parallel}(\theta)|^2}{|E_{p\parallel}(\theta)|^2 + |E_{p\perp}(\theta)|^2} + r \cdot \frac{|E_{p\perp}(\theta)|^2}{|E_{p\parallel}(\theta)|^2 + |E_{p\perp}(\theta)|^2} \right]$$

$$= \frac{1 - R_p(\theta)}{1 - R_p(0)} \left[ 1 + (r-1) \cdot \frac{|E_{p\perp}(\theta)|^2}{|E_{p\parallel}(\theta)|^2 + |E_{p\perp}(\theta)|^2} \right] \qquad (21)$$

$$= \frac{1 - R_p(\theta)}{1 - R_p(0)} \left[ 1 + (r-1) \frac{\sin^2 \theta}{\sin^2 \theta + |s|^2} \right],$$

where Equation (13) is used for the last step. The expression for the yield of s-polarized light can be combined with the one for p-polarized light to obtain Equation (22) (which could alternatively be derived from Equation (9):

$$\frac{QE(\theta)}{QE(0)} = \frac{1 - R(\theta)}{1 - R(0)} + \frac{(r-1)}{2} \frac{1 - R_p(\theta)}{1 - R_p(0)} \cdot \frac{|E_{p\perp}(\theta)|^2}{|E_{p\parallel}(\theta)|^2 + |E_{p\perp}(\theta)|^2} \qquad (22)$$

Essential parameters of photoelectric emission

Measurements of QE and evidence of vectorial photoelectric effect: In the following, the expressions derived above are used to calculate the Quantum Efficiency (QE) for certain materials. For Cu(111) with a work function of $\phi$=4.94 eV, the QE was measured for three different photon energies corresponding to hv = 5.44 eV, 5.74 eV, 6.28 eV in Pedersoli's experiments in [4]. The cooperativity parameters were found to be r = 49, 23, 10, respectively. The refractive indices for these energies are found from [6]. The essential parameters of [4] are summarized in table 1 below.

Table 1

| Photon energy | wavelength | $s_0$ (index of refraction) | r (cooperativity parameter) |
|---|---|---|---|
| 5.44 eV | 227.91 nm | 1.2594 + 1.7718 i | 49 |
| 5.74 eV | 216.00 nm | 1.1232 + 1.6903 i | 23 |
| 6.28 eV | 197.43 nm | 0.9927 + 1.4631 i | 10 |

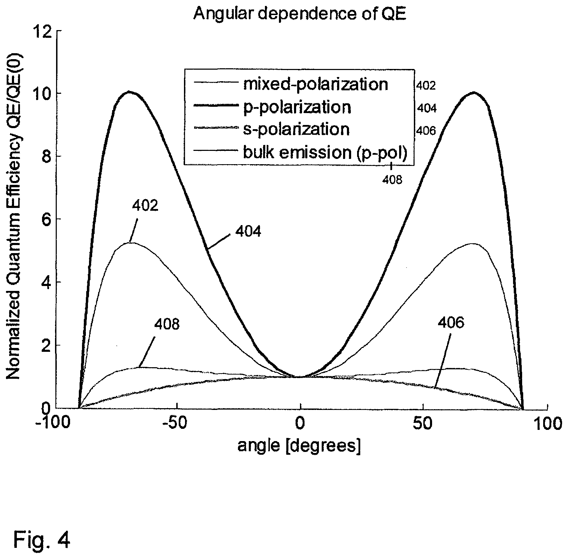

These input parameters are used in Equations (20), (21) and (22) to obtain Figure 4, which plots the normalized quantum efficiencies for different polarization types 402, 404, 406, 408 of light with energy 5.44 eV.
Note that for p-polarized light the vectorial photo-effect tends to increase the emission efficiency with increasing angle (up to a maximum which is reached at around 60°). In contrast, emission for s-polarized light, where no polarization component normal to the surface is present, tends to decrease with increasing angles.
It is possible to find an approximate expression for the emission efficiencies for p-polarized light and for bulk emission in terms of a simple relationship

$$\frac{QE(\theta)}{QE(0)} \propto 1 + B \sin^2 \theta \qquad (23)$$

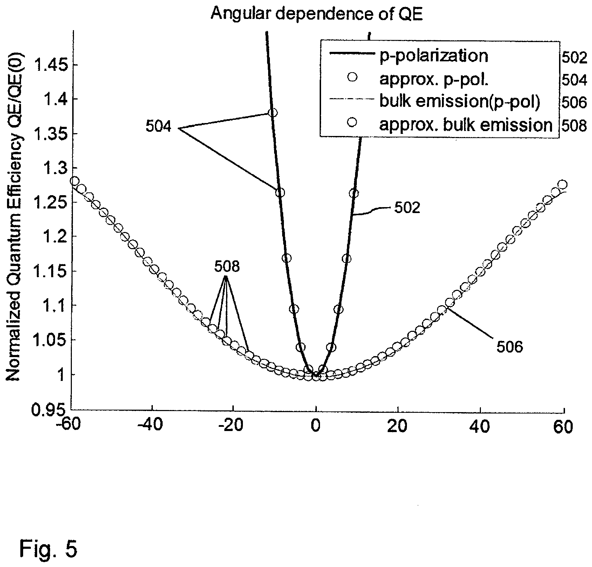

The approximate expressions are plotted in Figure 5 together with the accurate expressions. 502 and 504 indicate the QE of p-polarized light for the total emission and 506 and 508 the bulk emission. Solid lines 502, 506 denote accurate calculations and circles 504, 508 represent approximations according to the sin$^2$ law of Equation (23). For the approximations it is found $B_{tot}$ = 10.89 for total emission and $B_{bulk}$ = 0.38 for bulk emission. The ratio of $B_{tot} / B_{bulk}$ =28.82 denotes the efficiency improvement of total emission versus bulk emission.

It is to note that with increasing photon energies the cooperativity parameter r decreases and therefore the sensitivity to vectorial photoelectric emission deteriorates (see table 1 for values of r).

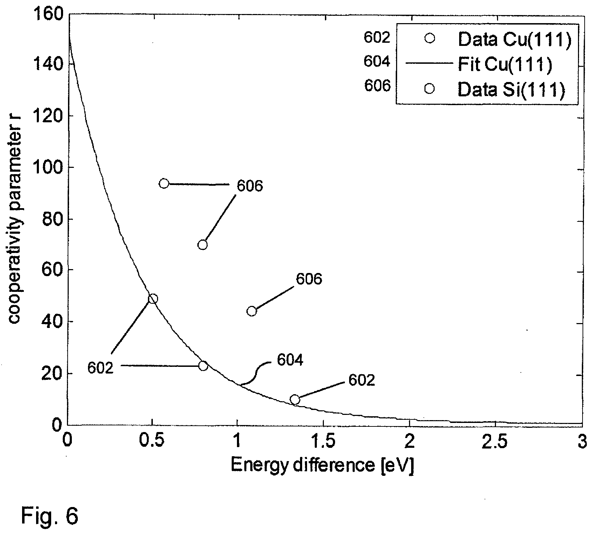

Variation of cooperativity parameter with wavelength: Whilst the data in [4] only provide the fitted cooperativity parameter r for three different wavelengths, it is desirable to have r for all wavelengths. Assuming an exponential dependence of the parameter the plot of Figure 6 is obtained. The cooperativity parameters for the three measurements of Perdersoli [4] are plotted against the difference $\Delta E$ between the radiation energy and the work function of copper $\phi$=4.94 eV, i.e. against $\Delta E$=hv-$\Phi$. The data referenced by Broudy [2] for silicon Si(111) are given by the circles 606.

It can be realized that the data points 602 are well fitted by an exponential function

$$r(\Delta E) = 1 + C_1 \exp(-C_2 \Delta E) \tag{24}$$

with the coefficients $C_1$=150.3 and $C_2$=2.3 eV$^{-1}$.

This expression shall therefore be adopted for the following discussions. Furthermore, the basic assumption is made that a similar relationship also holds for photoemission from a gold surface. This can be argued due to similar properties of gold and copper and also based on evidence found for the VPE in measurements on air-contaminated gold surfaces [8]. For comparison, Broudy cites measurements for Si(111)in [2] that are represented by the circles 606 in Figure 6.

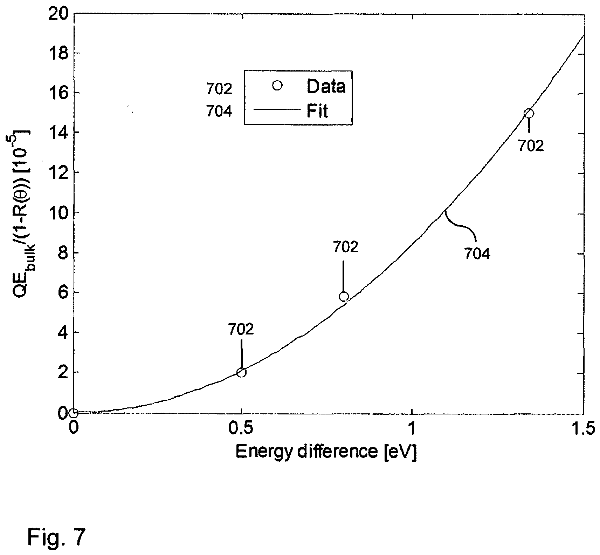

Obtaining the proportionality constant in Fowler's Law: It is important to find the proportionality constant $A_{PE}$. In reference [4], the proportionality parameter is found for Cu(111) but the fit is only shown as an inlet to Figure 2. From this plot, it is possible to approximately extract the data and fit them separately to obtain Figure 7. Figure 7 shows the measured quantum efficiencies normalized by the amount of absorbed light (1-R) for three different energies in reference [4]. The fitted curve, according to Fowler's law of Equation (6), is given by the solid line 704.

From the fit, the proportionality constant can be found to $A_{PE}$ = 8.43x10$^{-5}$ eV$^{-2}$=3.28x10$^{33}$ J$^{-2}$.

For comparison, for the air-contaminated gold surfaces which are discussed in [8] it was found QE=7x10$^{-5}$ at normal incidence for light with hv=4.9 eV (253 nm). Note that the reflectivity of gold is R=0.34 for normal incidence at a wavelength of 253 nm. Assuming that $\Phi_{Au}$=4.2 eV for a contaminated gold surface [7], the offset from threshold is 0.7 eV. From this, the proportionality constant is calculated to:

$$A_{PE} = \frac{QE}{1-R(0)}\left(hv - \phi_{Au}\right)^{-2} = \frac{7 \times 10^{-5}}{1-0.34}\left(0.7\,eV\right)^{-2} = 21.64 \times 10^{-5}\left[eV^{-2}\right] = 8.43 \times 10^{33}\left[J^{-2}\right] \tag{25}$$

This is higher by a factor of 2.5 than the measurements of $A_{PE}$ for copper, but for a conservative estimate we shall take the value for copper (3.28x10$^{33}$ J$^{-2}$) in the following discussions for emission from gold-coated surfaces.

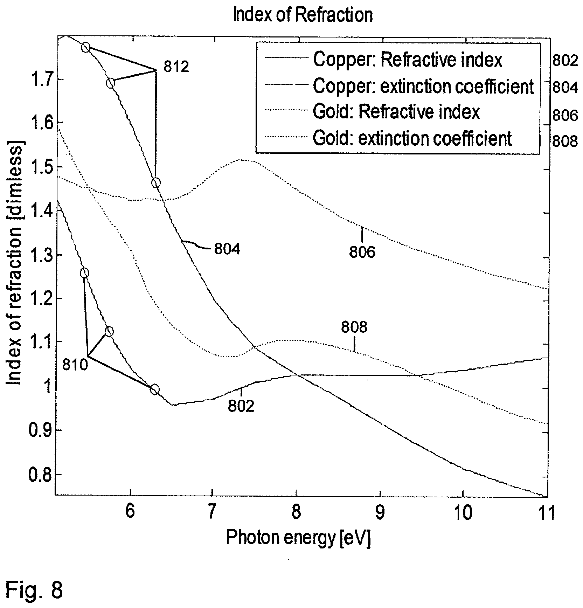

Variation of the index of refraction with wavelength: The complex index of refraction changes with wavelength. The necessary material properties were found in [6] for gold and copper. The real part of the complex index of refraction is the refractive index n whereas the imaginary part is the extinction coefficient k. Both parameters are plotted for gold and copper over a wavelength range corresponding to 5.1 eV to 11 eV photon energies in Figure 8. Figure 8 illustrates the index of refraction for copper (solid lines 802, 804) and gold (dotted lines 806, 808) over a wavelength range corresponding to photon energies from 5.1 eV to 11 eV. The lines 802, 806 correspond to the refractive index and the lines 804, 808 to the extinction coefficients. The data points used to re-produce the measurement data in [4] are given by the open circles 810 and 812.

Photo-currents for a black-body light source

Calculating the photo-currents: From Fowler's law it can be found that

$$\frac{QE_p(0)}{1-R_p(0)} = A_{PE}\left(hv - \phi_{Au}\right)^2 \tag{26}$$

Inserting Equation (26) into Equation (21) QE of p-polarized light is obtained:

$$QE_p(\theta) = A_{PE}\left(h\nu - \phi_{Au}\right)^2 \left(1 - R_p(\theta)\right)\left[1 + (r-1)\frac{\sin^2\theta}{\sin^2\theta + |s|^2}\right]$$

$$= QE_{p-bulk}(\theta)\left[1 + (r-1)\frac{\sin^2\theta}{\sin^2\theta + |s|^2}\right] \qquad (27)$$

Equation (27) shows that the total emission comprises a part from the bulk and a part from p-polarized light normal to the surface that is enhanced by a factor of (r-1) with respect to the bulk emission.

From Equation (4) for the spectral distribution of radiation emitted by a black-body source an expression for the number of photons $dN_{ph}$ per unit area and unit time within a segment dv of the spectral range is obtained:

$$dN_{ph} = n_{ph}(\nu, T)d\nu = \frac{I(\nu, T)}{h\nu}d\nu = \frac{\nu^2}{c^2}\frac{2\pi}{e^{\frac{h\nu}{k_B T}} - 1}\cdot\left(\frac{R_{sun}}{R_{au}}\right)^2 d\nu \qquad (28)$$

The number of incident photons can be related to the measured photo-emission current per unit area $i_A$ (i.e. it is a current density!) through the quantum efficiency by the following relation

$$di_A = e\cdot dN_{ph}\cdot QE(\theta,\nu) = e\,n_{ph}(\nu,T)\cdot QE(\theta,\nu)d\nu \qquad (29)$$

where e is the electron charge. Integrating the current over the full spectral range the emission current can be determined to:

$$i_A(\theta) = \int_{\nu_{min}}^{\infty} di_A = e\int_{\nu_{min}}^{\infty} n_{ph}(\nu,T)QE(\theta,\nu)d\nu$$

$$= e\int_{\nu_{min}}^{\infty} d\nu \frac{\nu^2}{c^2}\frac{2\pi}{e^{\frac{h\nu}{k_B T}} - 1}\cdot\left(\frac{R_{sun}}{R_{au}}\right)^2 \cdot A_{PE}\left(h\nu - \phi_{Au}\right)^2\left(1 - R_p(\theta,\nu)\right)\left[1 + (r(\nu)-1)\frac{\sin^2\theta}{\sin^2\theta + |s(\theta,\nu)|^2}\right], \qquad (30)$$

where $\nu_{min}$ is the threshold frequency defined by $h\nu_{min} = \phi_{AU}$.

Variation of photo-currents with cutoff energy: We shall calculate the frequency dependent quantities of the integrand of Equation (30) in a region between $\phi_{AU}$, which it is assumed to lie at 5.1 eV, and have upper limit of 11 eV.

The index of refraction enters many of those quantities. It is therefore important to know its variation over the entire region of interest, which is shown in Figure 8.

The calculation of the total photo-current, as described by Equation (30), depends on certain frequency-dependent parameters. These include the cooperativity parameter 'r' of Equation (12), the reflectivity 'Rp' of Equation (15), the parameter 's' defined in Equation (14), and the quantum efficiency for bulk emission of Equation (6), which are all known at this point.

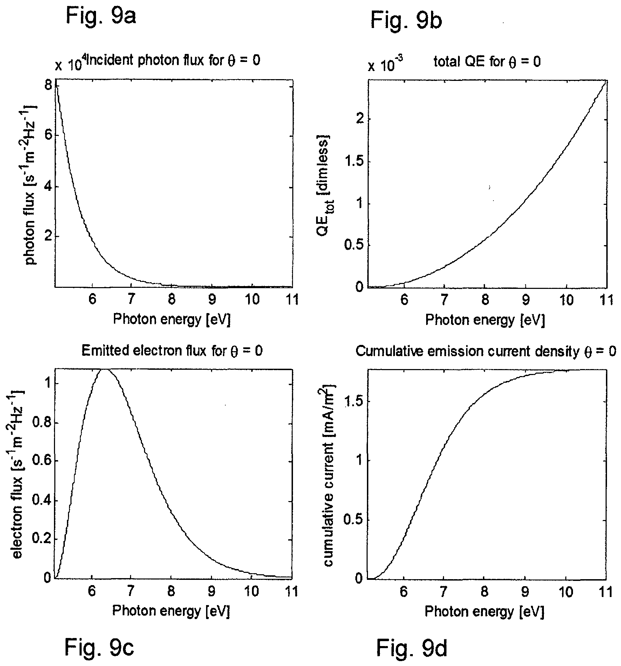

Taking a look at the main physical quantities, which are the photon flux $n_{ph}(\nu)$, the quantum efficiency $QE(\Theta,\nu)$, and the electron flux $n_e(\nu)$, which is their product: $n_e(\nu) = np_h(\nu)*QE(\Theta,\nu)$. Integrating the electron flux and multiplying by the elementary charge e, yields the emission current $i_A$ per unit area. Note that the upper integration limit was successively increased (cumulative sum) to investigate the impact of a variable cutoff towards higher photon energies. These quantities are depicted in Figs. 9, assuming an incidence angle of the light of 0°.

It becomes apparent that, although the photon flux steeply falls off towards higher energies as a consequence of the exponential function in the black-body radiation law, this is partially offset by the rise in quantum efficiency from the threshold towards higher energies, as described by Fowler's law (see Equation (6). This leads to an initial rise in electron flux which peaks at energies approximately 1.5 eV above threshold, before dropping off to zero towards higher energies. The photo-current reaches an asymptotic limit of 1.8 milli A/m$^2$. It is sufficient to integrate only photon energies up to 9 eV to get very close to this limit, as can be seen in the plot in the bottom right corner.

When the incidence angle is chosen different from 0°, the vectorial photoelectric effect additionally contributes to the emission process and generates much higher total emission currents. However, the cooperativity parameter r decreases rapidly with increasing photon energy so that it is mainly the photons of lower energies (up to 1 eV above the work function $\phi_{AU}$) that contribute to the sensitivity.

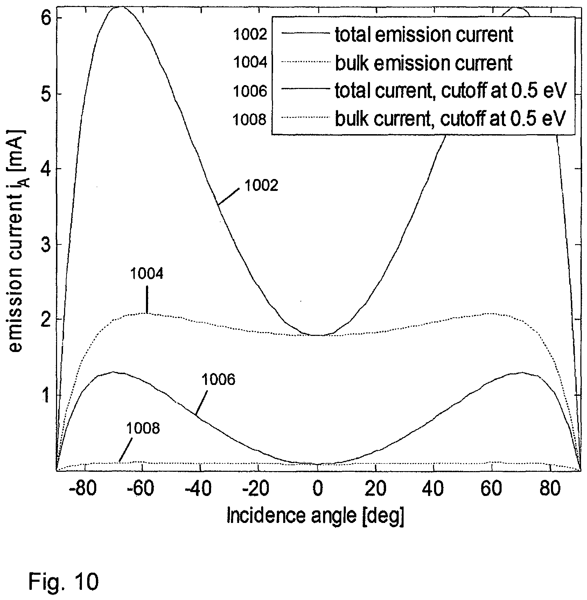

Variation of photo-currents with angle of incidence: So far it has only been considered the photo-emission as a function of the frequency of the incident light and as a function of the energy cutoff when contributions from a black-body source are integrated. Next, there will be a focus on the variation of the emission currents with incidence angle, while including contributions of all photons up to energies of 11 eV to the emission process. The data shown in Figure 10 are obtained from integrating the photo-currents given by Equation (30). Figure 10 shows the emission currents 1002, 1004 as a function of incidence angle if all photon energies above the threshold are considered and if only photons up to 0.5 eV above threshold are considered (curves 1006, 1008).

The solid line 1002 in Figure 10 indicates the emission current for p-polarized light when the full spectrum from threshold at 5.1 eV up to 11 eV is integrated. The solid line 1006 is the result for integration of the spectrum up to 0.5 eV above threshold. While the absolute values of the emission current are smaller when an energy cutoff is chosen (only up to 1.3 milli Ampere per square meter of detector area instead of 6 mA for no cutoff), the sensitivity to the incidence angle is increased. This is because primarily photons with energies close to the threshold contribute to the vectorial photoelectric effect, whereas photons of higher energy only contribute to the bulk emission and tend to dilute the overall sensitivity.

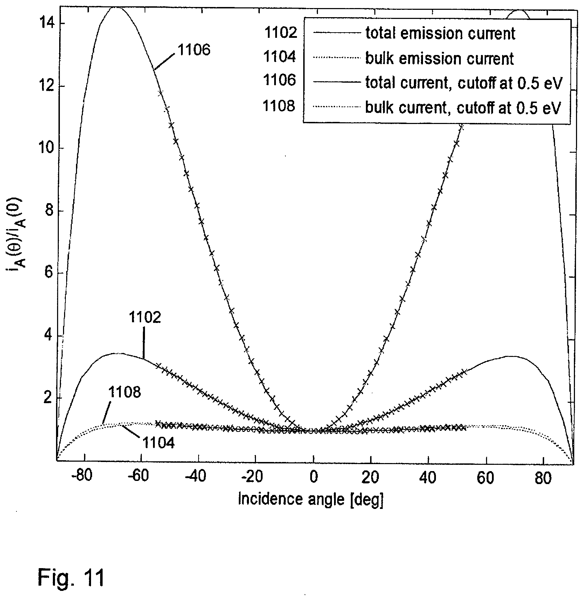

This can be seen in Figure 11, where the currents are normalized by their value at zero incidence angle. It is apparent that the sensitivity of the detector to changes in incidence angle is higher if only photons up to 0.5 eV above threshold contribute. This comes at the expense of a reduced emission current. Figure 11 shows a different representation of the data in Figure 10. The plot gives the emission current normalized by its value at normal incidence. The crosses indicate approximations with a $\sin^2$ law of Equation (23).

It is also remarkable to note that the photo-current for p-polarized light changes by over 1400% between 0° and 60°, whereas the photo-current for bulk emission alone only changes by 20%. This points out how important the vectorial photo-effect is to the angular sensitivity whereas bulk emission (which depends only on the reflectivity) has only a very low sensitivity.

One can also approximate the numerically determined curves by the approximate analytical expressions of Equation (23). The resulting fits are given by the crosses in Figure 11. One sees that the approximations are remarkably good and therefore can be used instead of the exact expressions for the following discussions. The results for the B-coefficients are summarized in table 2.

Table 2

| Emission type | B-coefficient | Current 0°/60° [milli A / m$^2$] |
|---|---|---|
| Total emission current | 3.1024 | 1.79 / 5.93 |
| Cut-off emission current ($\phi_{Au}$ + 0.5 eV) | 16.4484 | 0.09 / 1.3 |
| Total bulk current | 0.2397 | 1.79 / 2.07 |
| Cut-off bulk current ($\phi_{Au}$ + 0.5 eV) | 0.2805 | 0.09 / 0.11 |

It can also be found that the cut-off total emission current has a slope that is a factor of 9.1973/0.2805 ~ 33 larger than the cut-off bulk emission current.

Use of the VPE detector in a sun sensor

Next, the use of the VPE detector in a sun sensor will be described together with exemplary embodiments. Before, a comparison between a VPE detector and a cosine detector will be made.

So far it has been assumed that there is a constant photon flux from the sun onto the detector surface and the effect of geometry has not been considered. However, the actual photo-currents generated by the VPE detector also depend on the detector geometry, in specific on the orientation of a detector surface with respect to the aperture plane of the incident light. Two different cases can be distinguished:

    Case 1: The detector surface is parallel to the aperture plane of the sensor.
    Case 2: The detector surface is tilted (in particular ~60 deg) with respect to the aperture plane of the sensor.

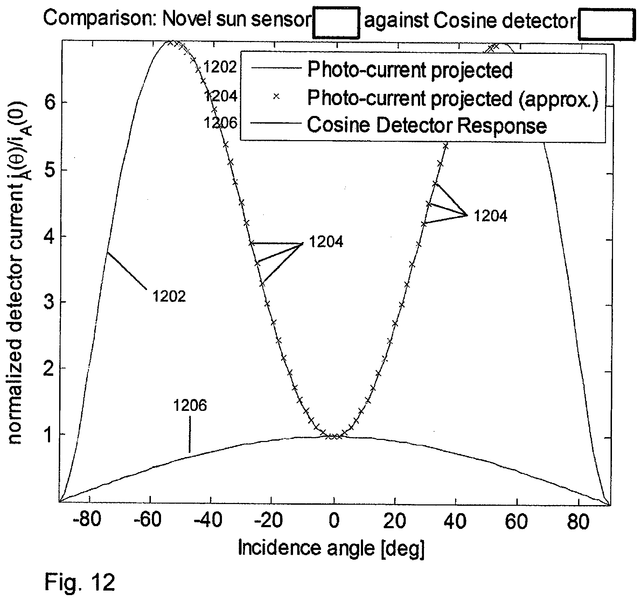

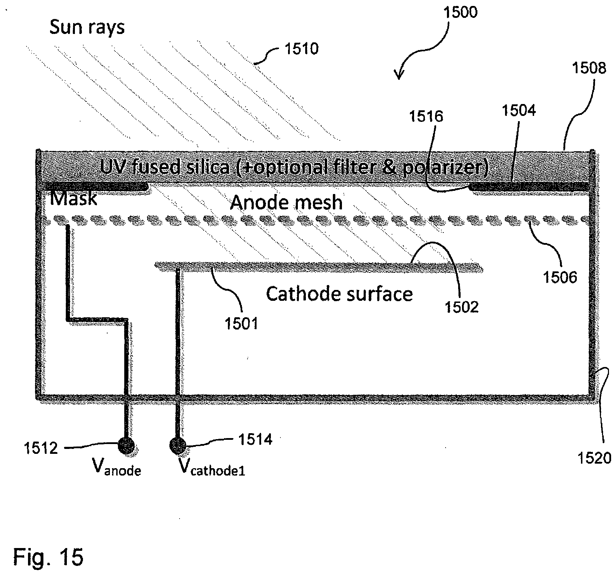

Case 1: If the detector surface 1502 (cathode surface) is parallel to the aperture plane 1504 of the sensor 1500 (see also Figure 15), the emission current must be multiplied by cos($\theta$), which is the geometric projection factor that accounts for the variation of the incident photon flux with angle. The resulting sensitivity curve for the VPE is given as the product of the curve 1106 in Figure 11 with cos($\theta$). This sensitivity curve is plotted as a solid line 1202 in Figure 12, which also shows the sensitivity curve of a simple cosine detector as solid line 1206. For angles between -60 deg to +60 deg, it is approximated by the following expression

$$I = I_0 \left(1 + B\sin^2\theta\right)\cos\theta \qquad\qquad (31)$$

If the parameter B is large, the maximal slope $K_s$ of this sensitivity curve is found to be $K_s$=5/8 B. This value is reduced compared to the slope if no geometric projection is considered (in which case the maximal slope is simply given by B). Considering that B ~ 16 for p-polarized light and a cutoff of 0.5 eV above threshold (see table 2), a maximal slope of Ks=10 is obtained. This implies that in this non-ideal geometry the VPE is approximately 10 times more sensitive than the cosine detector.

In detail, Figure 12 shows the (normalized) photo-emission currents for light cut-off at 0.5 eV above threshold which is given by the solid line 1202. The crosses 1204 are the analytical approximation according to Equation (23). The geometric projection is accounted for in the VPE currents. The cosine detector response is given as solid line 1206.

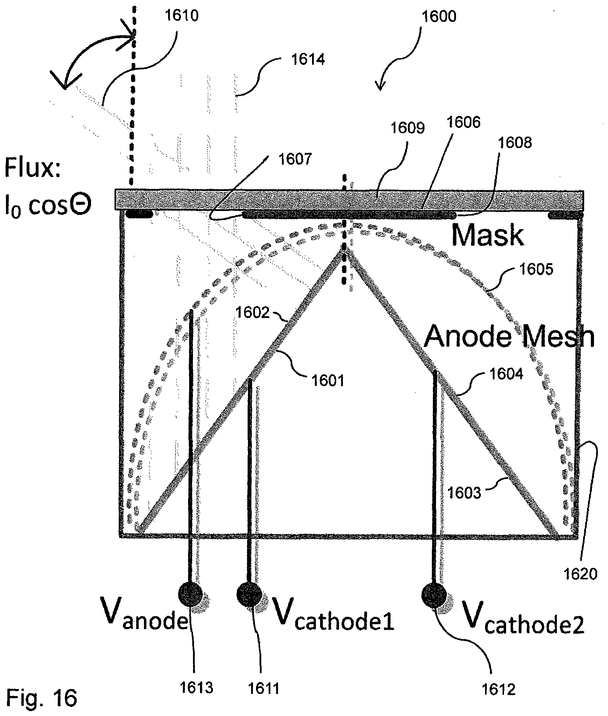

Case 2: If the detector surface is tilted (e.g. 60 deg) with respect to the aperture plane of the sensor (see also Figure 16), the approximate expression for the quantum efficiency (Equation (23) must be multiplied by a cosine function that is shifted by 60 deg to obtain:

$$I = I_0 \left(1 + B\sin^2\theta\right)\cos\left(\theta + 60°\right) \qquad\qquad (32)$$

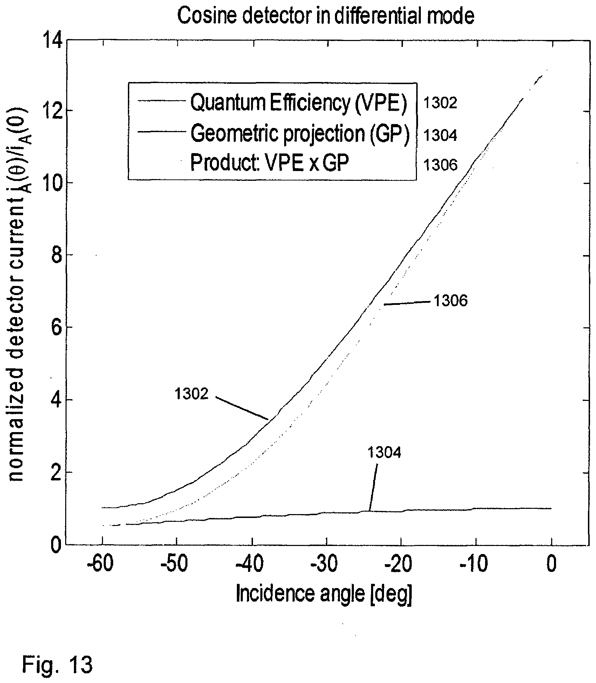

Both, the curve for the QE (solid line 1302) and for the shifted cosine (solid line 1304) are plotted in Figure 13, where the product of both curves is plotted as the middle curve 1306. In this case the geometric projection as well as the quantum efficiency increase with increasing incidence angle to yield a sensitivity curve of a slope that is larger than B. It has been found that the maximum slope is approximately given by $K_s$ = 20, making it 20 times more accurate than the cosine detector.

Detector Housing

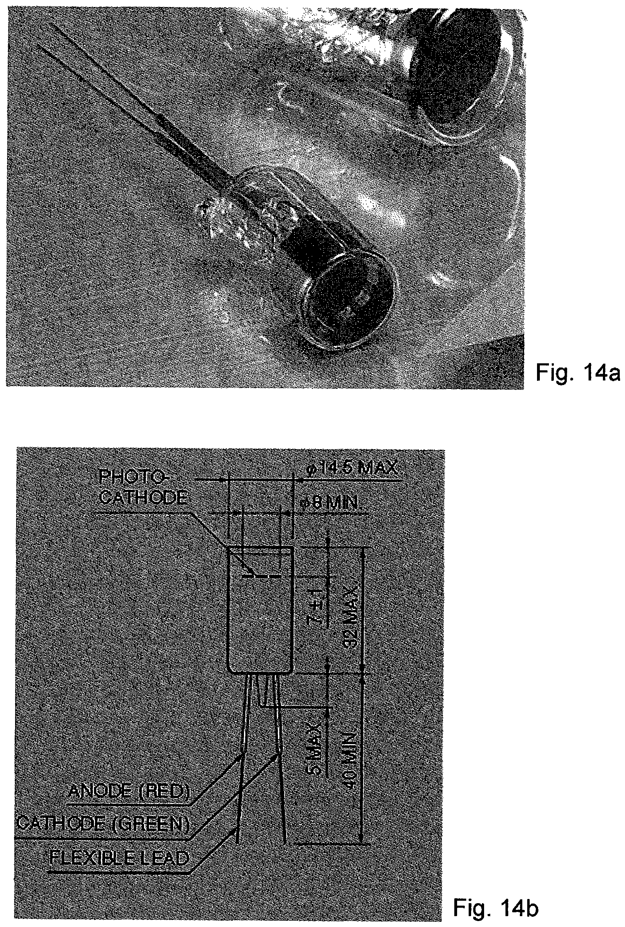

The proposed sun sensor consists of a metal (in particular gold) substrate that may either be directly be exposed to the void of space (reliant on UV cleaning to mitigate contamination) or encased in a vacuum packaging (reliant on sealed environment to avoid contamination). In the latter, the design would then be similar to that of a standard photo-cathode, such as those produced by Hamamatsu [17]. The dimension of the available packaging is typically 10 mm to 15 mm in diameter and 30 mm in length (see Figure 14a, which shows Hamamatsu phototubes). In Figure 14b dimensions of the Hamamatsu phototube containing a gold cathode are figured out.

When directly exposed to the void of space, contamination of the sensor surfaces, in particular oxidization, may lead to a fast degradation of the vectorial photo-electric effect [2]. For this reason, use is made of a noble metal, such as gold, as sensor surface material which is chemically quite inert and does not tend to oxidize. Gold offers the additional advantage that its surface is very well cleaned by UV-light incident in combination with Ozone, molecular or atomic oxygen, an effect which is commonly referred to as "UV-cleaning" [10,], [11], [12].

For altitudes between 200 km to 600 km, atomic oxygen is the prevalent species in the atmosphere. While its density decreases rapidly towards even higher altitudes, there are still about 104 particles/cm^3 at 1000 km altitude. This pervasive concentration of oxygen ensures that there is a permanent cleaning process of the sensor surface if it is exposed to the environment and not vacuum-sealed. This is another advantageous feature of the sensor.

Emitted electrons are collected with a receiving anode 1506, 1605. This can be accomplished by placing above the detector surface 1502; 1602, 1604 a wire mesh that largely transmits the incident light and collects the emitted electrons.

The used detector surface material may be any metal where the vectorial photoelectric effect occurs and is sufficiently strong. The analyses above assumed that the detector material is gold. Characteristic parameters for the vectorial photoelectric effect, such as the cooperativity parameter r, have not yet been measured accurately for gold and are therefore taken to be identical to those measured for copper in [4]. Known materials where the vectorial photo-electric effect occurs are e.g. copper [4] or silicon [2]. The crystalline symmetry is not important for the vectorial photo-electric effect. It was shown that the effect is the same for single crystal copper as for polycrystal copper [3].

Hereinafter, two reference designs which give suggestions of possible implementations of detectors based on the vectorial photo-effect (VPE) in sun sensors are outlined.

The first configuration, shown in Figure 15, implements a single metal cathode 1501 in a housing 1520 of the detector 1500. The anode mesh 1506 that collects the emitted photo-electrons is shown some distance above the cathode 1501. The whole package is covered by a fused silica window 1508 which may also include polarizer and transmission filter. The window 1508 is arranged on a mask 1504 having an aperture 1516 to allow solar rays 1510 to incide on the cathode 1501 and its cathode surface, respectively. The cathode 1501 and the anode 1506 are connected to a respective voltage connection 1514 and 1512, respectively. This configuration is merely for demonstration of the required components and is not ideal on its own for a sensor as it suffers from several drawbacks. For one, the arrangement cannot distinguish between positive and negative angles. Secondly, the increasing quantum efficiency of the VPE detector with incidence angle, as shown in Figure 11, is partially offset by the decreasing photon flux as a consequence of the geometric projection onto the detector surface. This results in a reduced sensitivity curve, as shown in Figure 12. Therefore, the arrangement does not exploit the full sensitivity that might be achieved.

In the second reference configuration, two sensitive detector surfaces (cathode surfaces) 1602, 1604 of detectors (cathodes) 1601, 1603 are inclined by approximately 50-60 degrees with respect to the detector window 1609 and transmission mask 1608, as shown in Figure 16. As such, this embodiment provides two detectors in a housing 1620 where both are inclined with respect to the sun at normal incidence.

When the sun is normal to the window (broken rays 1614), its angle with respect to the metal surface 1602 is approximately 60 degrees, which maximizes the vectorial photoelectric effect. At the same time, the photon flux is maximal at this angle. When the incidence angle $\theta$ increases (solid rays 1610), the emission efficiency due to the vectorial photo-effect decreases and at the same time the photon flux decreases. An anode mesh 1605 collects the emitted photo-electrons. The anode mesh 1605 is bent around the two cathodes 1601, 1603. The whole package is covered by a fused silica window 1609 which may also include polarizer and transmission filter. The window 1609 is arranged on a mask 1606 having two apertures 1607 and 1608 to allow solar rays 1610, 1614 to incide on the cathodes 1601, 1603 and its cathode surfaces 1602, 1604, respectively. As before, each of the cathodes 1601, 1603 and the bent anode mesh 1605 are connected to respective voltage connection 1611, 1612 and 1613, respectively. As a result, for this arrangement the geometric projection effect reinforces the vectorial photo-effect rather than offsetting it (see also Figure 13).

Table 3 illustrates important (default) operating parameters of a VPE-based sun sensor. The middle column reflects typical (default values), the right-most column the range of values which is expected depending on specific design choices.

Table 3

| Parameter | Value (typical) | Range (design specific) |
|---|---|---|
| Detector area (active) | 1 cm^2 | 0.1 cm$^2$-100 cm$^2$ |
| Detector current | 0.1 pA | 1 nA -50 $\mu$A |
| Detector material | Gold | VPE sensitive materials |
| Detector bias voltage (anode) | 15V | 10V-28V |
| Angular range | -65° to +65° | Ranges differ for combinations |
| Sensitivity to angular change $K_s = dI(\theta)/d\theta/I(0)$ | 10 | 5-20, depending on use of auxiliary components |

Auxiliary Components

It is required to operate the VPE for light energies between 5.1 eV (threshold energy for gold) and a cutoff at 5.6 eV, or possibly at 6.1 eV. The corresponding wavelengths are summarized in table 4, which outlines characteristic photon energies and the corresponding wavelengths.

Table 4

| Energy | 5.1 eV | 5.6 eV | 6.1 eV |
|---|---|---|---|
| Wavelength | 243 nm | 221 nm | 203 nm |

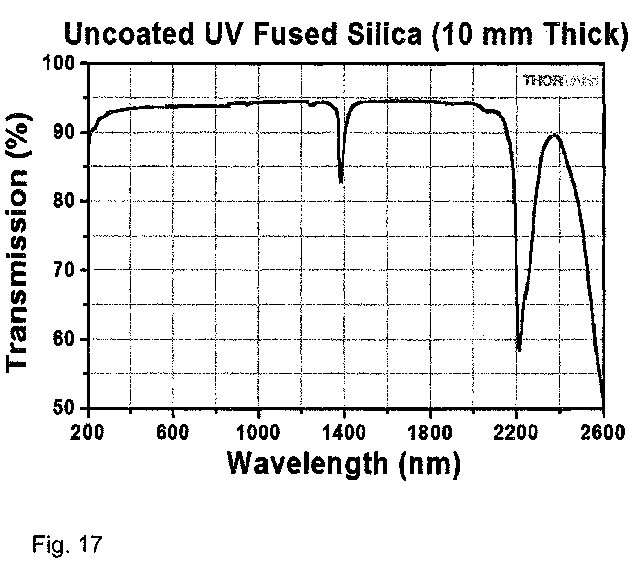

Typically, UV fused silica windows (UVFS) transmit light down to wavelengths of around 185 nm. As an example, Thorlabs quotes the UVFS window transmission shown in Figure 17 for an uncoated fused silica substrate of 10 mm [14]. Alternative substrates made from Magnesium Fluoride (MgF2), Sapphire, and Calcium Fluoride (CaF2) may also be used.

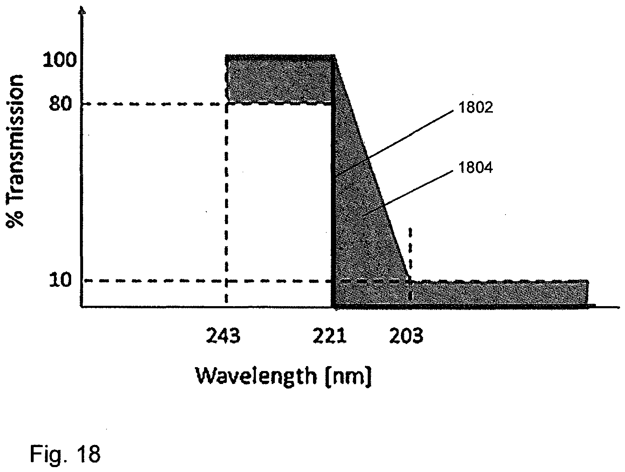

As described above, it is necessary to truncate the incident light energies close to the threshold at 5.1 eV in order to achieve a high sensitivity to the vectorial photo-electric effect. It was assumed that the cutoff is 0.5 eV above threshold, i.e. at 5.6 eV. Figure 18 illustrates the ideal UV window for the VPE detector transmits light between 243 nm and 221 nm before dropping to zero transmission at higher wavelengths. The ideal window transmission would therefore resemble the curve 1802 of Figure 18, whereas the acceptable range of transmission profiles is indicated by the area 1804. Curves that lie within that range result in sensitivity curves close the ideal case on the one hand, and account for realistic material properties on the other hand.

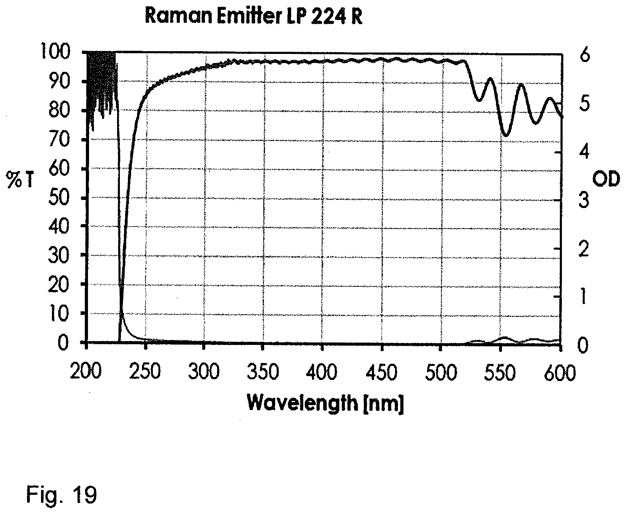

The required drop in transmission for wavelengths smaller than 221 nm can be achieved by applying a reflective coating on the window which is optimized to obtain high reflectivity at wavelengths around 203 nm but drops off towards higher wavelengths to transmit in the range 221-243 nm. Such custom coatings could be applied e.g. by Elliot scientific [15]. Other manufacturers, such as AHF Filters [16], provide suitable razor-edge filters. An example filter with a cutoff at at 229 nm from AHF is shown in Figure 19.

The VPE operates with maximal sensitivity, if p-polarized light is incident on the surface. This can be ensured by the use of a polarizer. In order to optimally exploit this effect, two requirements must be fulfilled: The light must be linearly polarized and the plane of incidence must lie in the plane defined by the polarizer axis and the sensor surface normal.

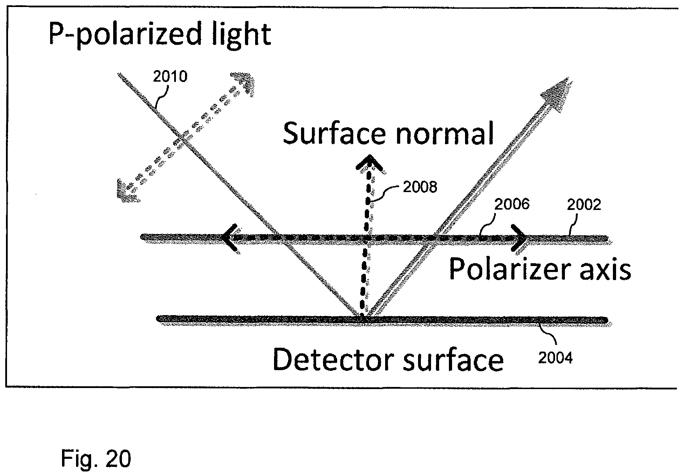

Therefore, a polarizer 2002 placed above the detector surface 2004 acts as a natural selector of a sensitive incidence plane. The detector 2004 is then primarily sensitive to angular changes of the incident light in a plane that is spanned by the polarizer axis 2006 and the surface normal 2008. This is depicted in Figure 20. If, on the other hand, the incidence plane is normal to the image plane of Figure 20, the transmitted light is s-polarized, which leads to reduced emission currents compared to p-polarized light. Hence, the polarizer ensures that the detector is sensitive to light in the plane of incidence spanned by polarizer axis and surface normal.

If no polarizer is used, the light of the sun can be considered as having mixed polarization, which decreases the sensitivity by a factor of approximately 2. This effect is demonstrated in Figure 4 which is based on the data of [3], [4]. The sensor can still be operated in such a configuration (without polarizer), but it comes at the expense of reduced sensitivity.

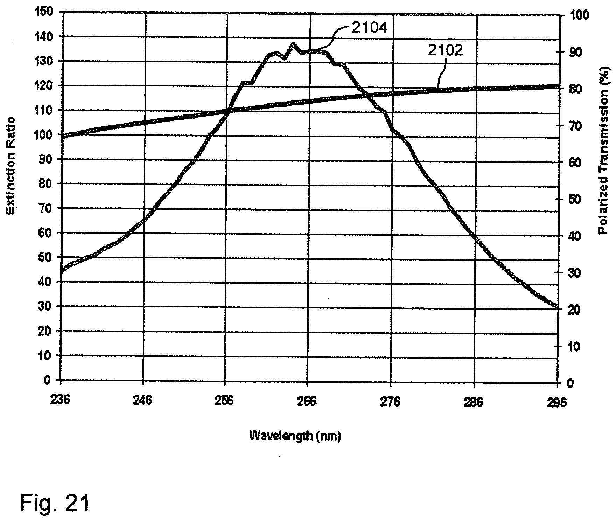

Polarizers in the deep UV are produced by several companies, for example Meadowlark [13]. These polarizers are based on dielectric nanowire arrays, where the substrate is made from fused silica and the wire-grid from dielectric material rather than metal to give high damage thresholds and avoid oxidization. The wire-grid polarizer characteristics as quoted by Meadowlark [13] are given in Figure 21. It shows typical transmission (curve 2102) and contrast ratio (curve 2104) versus wavelength over the usable wavelength range for nanowire polarizers.

Meadowlark quotes available custom wavelengths between 190 nm to 300 nm, which easily covers our desired range between 220 and 240 nm.

The extinction ratios for short wavelengths around 240 nm are typically only about 1:50. This is not very large but easily sufficient for use in a spacecraft. Also note that the transmission drops to approximately 70% for these wavelengths, which is still sufficiently large.

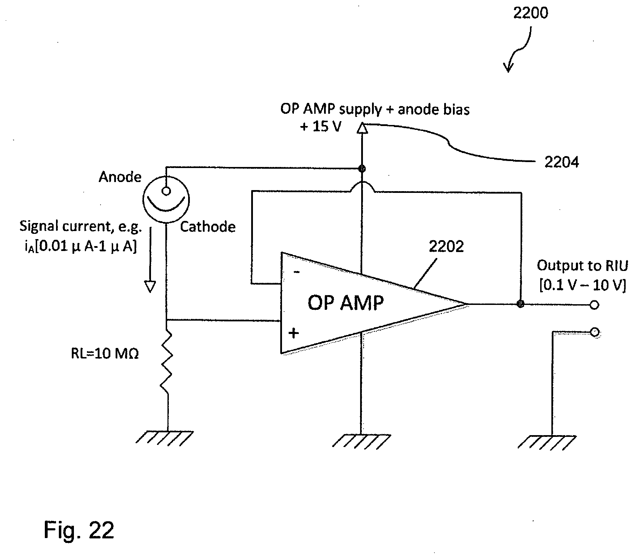

The VPE-detector resembles a photo-cathode and outputs a current which must be converted into a voltage that is then fed to a remote-interface-unit (RIU), i.e. a processing unit, of the spacecraft. This is achieved using a transimpedance amplifier circuit with an operational amplifier 2202 (OpAmp) at its core. The bias voltage 2204 for the VPE-detector can at the same time be used as a supply voltage for the OpAmp 2202. An example for an operating circuit is given in Figure 22.

### References

[1] R.H. Fowler, "The analyses of photoelectric sensitivity curves for clean metals at various temperatures", Phys. Rev. 38, 45 (1931)

[2] R.M. Broudy, "Vectorial Photoelectric Effect", Physical Review B 3, 3641(1971)

[3] E. Pedersoli, F. Banfi, B. Ressel, S. Pagliara, C. Giannetti et al., "Evidence of vectorial photoelectric effect on Copper", Applied Physics Letters 87, 081112 (2005)

[4] E. Pedersoli et al., "Surface and bulk contribution to Cu(111) quantum efficiency", Applied Physics Letters 93, 183505 (2008)

[5] H.Y. Fan, Phys Rev 68, 43 (1945)

[6] E.D. Palik, Handbook of Optical constants, Academic Press, Boston (1985); referenced on website: ww.refractiveindex.info

[7] B. Feuerbacher and B. Fitton, "Experimental investigation of photo-emission from satellite surface materials", J. Appl. Phys. 43,1563 (1972)

[8] G. Hechenblaikner, T. Ziegler, I. Biswas, C. Seibel. M. Schulze N. Brandt, A. Schoell, P. Bergner, and F.Reinert. "Energy distribution and quantum yield for photoemission from air-contaimnated gold surfaces under ultraviolet illumination close to the threshold", J.Appl.Phys. 111,124914 (2012)

[9] James Wertz, "Spacecraft Attitude Determination and Control", Astrophysics and Space Science Library, Volume 73, Kluwer Academic Publishers (2002)

[10] J. Vig, "UV/Ozone cleaning of surfaces, research and development Technical Report SCLET-TR-86-6 US-ARMY Laboratory Command, Fort Monmouth (1986)

[11] Vig, John R. "UV/ozone cleaning of surfaces." Journal of Vacuum Science & Technology A: Vacuum, Surfaces, and Films 3.3 (1985): 1027-1034.

[12] Karen A. Reinhardt and Werner Kern ," Handbook of silicon Waver cleaning Technology", William Andrew Publishings (2007)

[13] http://www.meadowlark.com/polarizer.php

[14] http://www.thorlabs.de/newgrouppage9.cfm?objectgroup id=3983

[15] http://www.elliotscientific.com/

[16] http://www.ahf.de/

[17] http://www.hamamatsu.com/jp/en/product/alpha/P/3005/index.html

**Claims**

1. A sun sensor, in particular for use in an attitude and orbit control system of a spacecraft, with at least one detector (1600), each of the detectors comprising:

   - a cathode (1601, 1603) with at least one planar detector surface (1602, 1604) that is made of metal and emits electrons upon exposure to UV-light,
   - a receiving anode (1605) for collecting the electrons emitted by the at least one planar detector surface (1602, 1604),
   - a current sensing means for measuring a current that is generated by the electrons which are emitted by the at least one planar detector surface (1602, 1604),
   - a processing unit (2200) for evaluating the current measured by the current sensing means, wherein the processing unit (2200) is adapted to determine an incidence angle of solar rays from an amount of the evaluated current, **characterized in that** the at least one planar detector surface (1602, 1604) is inclined with respect to an aperture plane (1606) of the sun sensor that allows the solar rays to be incident on the planar detector surface (1602, 1604).

2. The sun sensor according to claim 1, wherein the metal of the planar detector surface (1602, 1604) exhibits a vectorial photo-electric effect.

3. The sun sensor according to claim 1 or 2, wherein the metal of the planar detector surface (1602, 1604) is selected from a noble metal, in particular gold.

4. The sun sensor according to one of claims 1 to 3, wherein the cathode (1601, 1603) is made from the metal of the planar detector surface (1602, 1604).

5. The sun sensor according to one of claims 1 to 3, wherein the cathode (1601, 1603) comprises a bulk material which is coated with the metal of the planar detector surface (1602, 1604).

6. The sun sensor according to one of the preceding claims, wherein the at least one planar detector surface (1602, 1604) is arranged in a housing (1620).

7. The sun sensor according to claim 6, wherein the at least one planar detector surface (1602, 1604) is encapsulated in the housing (1620).

8. The sun sensor according to one of the preceding claims, wherein a polarization filter is arranged in front of the at least one planar detector surface (1602, 1604).

9. The sun sensor according to one of the preceding claims, wherein an optical window filter is arranged in front of the at least one planar detector surface (1602, 1604).

10. The sun sensor according to one of the preceding claims, further comprising a voltage source for providing a negative bias voltage to the at least one planar detector surface (1602, 1604) relative to the receiving anode (1605).

11. The sun sensor according to one of the preceding claims, wherein the receiving anode (1605) is arranged above the at least one planar detector surface (1602, 1604) while having a predetermined distance to the at least one planar detector surface (1602, 1604).

12. The sun sensor according to one of the preceding claims, wherein the receiving anode (1605) is made from a wire mesh.

**Patentansprüche**

1. Sonnensensor, insbesondere zur Verwendung in einem Lage- und Bahnregelungssystem eines Raumfahrzeugs, mit mindestens einem Detektor (1600), wobei jeder der Detektoren Folgendes umfasst:

   - eine Kathode (1601, 1603) mit mindestens einer planaren Detektoroberfläche (1602, 1604), die aus Metall hergestellt ist und bei Exponierung mit UV-Licht Elektronen emittiert,
   - eine Empfangsanode (1605) zum Sammeln der von der mindestens einen planaren Detektoroberfläche (1602, 1604) emittierten Elektronen,
   - ein Stromerfassungsmittel zum Messen eines Stroms, der von den Elektronen erzeugt wird, die von der mindestens einen planaren Detektoroberfläche (1602, 1604) emittiert werden,
   - eine Verarbeitungseinheit (2200) zum Auswerten des Stroms, der von dem Stromerfassungsmittel gemessen wurde, wobei die Verarbeitungseinheit (2200) dazu eingerichtet ist, einen Einfallswinkel von Sonnenstrahlen aus einem Betrag des ausgewerteten Stroms zu bestimmen, **dadurch gekennzeichnet, dass**

   die mindestens eine planare Detektoroberfläche (1602, 1604) in Bezug auf eine Aperturebene (1606) des Sonnensensors geneigt ist, die den Sonnenstrahlen ermöglicht, auf die planare Detektoroberfläche (1602, 1604) aufzutreffen.

2. Sonnensensor nach Anspruch 1, wobei das Metall der planaren Detektoroberfläche (1602, 1604) einen vektoriellen photoelektrischen Effekt zeigt.

3. Sonnensensor nach Anspruch 1 oder 2, wobei das Metall der planaren Detektoroberfläche (1602, 1604) aus einem Edelmetall, insbesondere Gold ausgewählt ist.

4. Sonnensensor nach einem der Ansprüche 1 bis 3, wobei die Kathode (1601, 1603) aus dem Metall der planaren Detektoroberfläche (1602, 1604) hergestellt ist.

5. Sonnensensor nach einem der Ansprüche 1 bis 3, wobei die Kathode (1601, 1603) ein Massenmaterial umfasst, das mit dem Metall der planaren Detektoroberfläche (1602, 1604) beschichtet ist.

6. Sonnensensor nach einem der vorhergehenden Ansprüche, wobei die mindestens eine planare Detektoroberfläche (1602, 1604) in einem Gehäuse (1620) angeordnet ist.

7. Sonnensensor nach Anspruch 6, wobei die mindestens eine planare Detektoroberfläche (1602, 1604) in dem Gehäuse (1620) eingekapselt ist.

8. Sonnensensor nach einem der vorhergehenden Ansprüche, wobei ein Polarisationsfilter vor der mindestens einen planaren Detektoroberfläche (1602, 1604) angeordnet ist.

9. Sonnensensor nach einem der vorhergehenden Ansprüche, wobei ein Optikfensterfilter vor der mindestens einen planaren Detektoroberfläche (1602, 1604) angeordnet ist.

10. Sonnensensor nach einem der vorhergehenden Ansprüche, der weiterhin eine Spannungsquelle zum Bereitstellen einer negativen Vorspannung an die mindestens eine planare Detektoroberfläche (1602, 1604) in Bezug auf die Empfangsanode (1605) umfasst.

11. Sonnensensor nach einem der vorhergehenden Ansprüche, wobei die Empfangsanode (1605) über der mindestens einen planaren Detektoroberfläche (1602, 1604) angeordnet ist, während sie einen vorherbestimmten Abstand zu der mindestens einen planaren Detektoroberfläche (1602, 1604) aufweist.

12. Sonnensensor nach einem der vorhergehenden Ansprüche, wobei die Empfangsanode (1605) aus einem Drahtgeflecht hergestellt ist.

**Revendications**

1. Capteur solaire, en particulier destiné à être utilisé dans un système de commande d'attitude et d'orbite d'un engin spatial, avec au moins un détecteur (1600), chacun des détecteurs comprenant :

- une cathode (1601, 1603) avec au moins une surface de détecteur plane (1602, 1604) qui est faite de métal et émet des électrons lors d'une exposition à une lumière UV,
- une anode de réception (1605) pour collecter les électrons émis par la au moins une surface de détecteur plane (1602, 1604),
- un moyen de détection de courant pour mesurer un courant qui est généré par les électrons qui sont émis par la au moins une surface de détecteur plane (1602, 1604),
- ne unité de traitement (2200) pour évaluer le courant mesuré par le moyen de détection de courant, l'unité de traitement (2200) étant adaptée pour déterminer un angle d'incidence de rayons solaires à partir d'une quantité du courant évalué, **caractérisé par le fait que** la au moins une surface de détecteur plane (1602, 1604) est inclinée par rapport à un plan d'ouverture (1606) du capteur solaire qui permet aux rayons solaires d'être incidents sur la surface de détecteur plane (1602, 1604).

2. Capteur solaire selon la revendication 1, dans lequel le métal de la surface de détecteur plane (1602, 1604) présente un effet photoélectrique vectoriel.

3. Capteur solaire selon la revendication 1 ou 2, dans lequel le métal de la surface de détecteur plane (1602, 1604) est choisi parmi un métal noble, en particulier l'or.

4. Capteur solaire selon l'une des revendications 1 à 3, dans lequel la cathode (1601, 1603) est faite à partir du métal de la surface de détecteur plane (1602, 1604).

5. Capteur solaire selon l'une des revendications 1 à 3, dans lequel la cathode (1601, 1603) comprend un matériau de base qui est revêtu du métal de la surface de détecteur plane (1602, 1604).

6. Capteur solaire selon l'une des revendications précédentes, dans lequel la au moins une surface de détecteur plane (1602, 1604) est disposée dans un logement (1620).

7. Capteur solaire selon la revendication 6, dans lequel la au moins une surface de détecteur plane (1602, 1604) est encapsulée dans le logement (1620).

8. Capteur solaire selon l'une des revendications précédentes, dans lequel un filtre de polarisation est disposé devant la au moins une surface de détecteur plane (1602, 1604).

9. Capteur solaire selon l'une des revendications précédentes, dans lequel un filtre à fenêtre optique est disposé devant la au moins une surface de détecteur plane (1602, 1604).

10. Capteur solaire selon l'une des revendications précédentes, comprenant en outre une source de tension pour fournir une tension de polarisation négative à la au moins une surface de détecteur plane (1602, 1604) par rapport à l'anode de réception (1605).

11. Capteur solaire selon l'une des revendications précédentes, dans lequel l'anode de réception (1605) est disposée au-dessus de la au moins une surface de détecteur plane (1602, 1604) tout en ayant une distance prédéterminée à la au moins une surface de détecteur plane (1602, 1604).

12. Capteur solaire selon l'une des revendications précédentes, dans lequel l'anode de réception (1605) est faite à partir d'un treillis métallique.

Fig. 1

Comparison: Novel sun sensor (red) against Cosine detector (blue)

Fig. 2

Fig. 3a

Fig. 3b

Fig. 4

Fig. 5

Fig. 6

Fig. 7

Fig. 8

## Fig. 9a

Incident photon flux for θ = 0

## Fig. 9b

total QE for θ = 0

Emitted electron flux for θ = 0

Cumulative emission current density θ = 0

## Fig. 9c

## Fig. 9d

Fig. 10

Fig. 11

Fig. 12

Fig. 13

Fig. 14a

Fig. 14b

Fig. 15

Fig. 16

# Uncoated UV Fused Silica (10 mm Thick)

Fig. 17

Fig. 18

Fig. 19

P-polarized light

2010

Surface normal

2008

2006    2002

Polarizer axis

Detector surface    2004

Fig. 20

Fig. 21

2200

OP AMP supply + anode bias
+ 15 V

2204

Anode

Signal current, e.g.
$i_A$[0.01 µ A-1 µ A]

Cathode

2202

OP AMP

−

+

Output to RIU
[0.1 V – 10 V]

RL=10 MΩ

Fig. 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3188472 A1

**Non-patent literature cited in the description**

- Energy distribution and quantum yield for photoemission from air-contaminated gold surfaces under ultraviolet illumination close to the threshold. **HECHENBLAIKNER et al.** Journal of Applied Physics. American Institute of Physics, 15 June 2012, vol. 111
- **R.H. FOWLER.** The analyses of photoelectric sensitivity curves for clean metals at various temperatures. *Phys. Rev.,* 1931, vol. 38, 45
- **R.M. BROUDY.** Vectorial Photoelectric Effect. *Physical Review B,* 1971, vol. 3, 3641
- **E. PEDERSOLI ; F. BANFI ; B. RESSEL ; S. PAGLIARA ; C. GIANNETTI et al.** Evidence of vectorial photoelectric effect on Copper. *Applied Physics Letters,* 2005, vol. 87, 081112
- **E. PEDERSOLI et al.** Surface and bulk contribution to Cu(111) quantum efficiency. *Applied Physics Letters,* 2008, vol. 93, 183505
- **H.Y. FAN.** *Phys Rev,* 1945, vol. 68, 43
- **E.D. PALIK.** Handbook of Optical constants. Academic Press, 1985
- **B. FEUERBACHER ; B. FITTON.** Experimental investigation of photo-emission from satellite surface materials. *J. Appl. Phys.,* 1972, vol. 43, 1563
- **G. HECHENBLAIKNER ; T. ZIEGLER ; I. BISWAS ; C. SEIBEL ; M. SCHULZE ; N. BRANDT ; A. SCHOELL ; P. BERGNER ; F.REINERT.** Energy distribution and quantum yield for photoemission from air-contaimnated gold surfaces under ultraviolet illumination close to the threshold. *J.Appl.Phys.,* 2012, vol. 111, 124914
- Spacecraft Attitude Determination and Control. **JAMES WERTZ.** Astrophysics and Space Science Library. Kluwer Academic Publishers, 2002, vol. 73
- **J. VIG.** *UV/Ozone cleaning of surfaces, research and development Technical Report SCLET-TR-86-6 US-ARMY Laboratory Command,* 1986
- **VIG, JOHN R.** UV/ozone cleaning of surfaces. *Journal of Vacuum Science & Technology A: Vacuum, Surfaces, and Films,* 1985, vol. 3.3, 1027-1034
- **KAREN A. REINHARDT ; WERNER KERN.** Handbook of silicon Waver cleaning Technology. William Andrew Publishings, 2007